# EUROPÄISCHE PATENTSCHRIFT

(11) **EP 1 308 077 B1**
(45) Veröffentlichungstag und Bekanntmachung des Hinweises auf die Patenterteilung: **23.08.2006**
(21) Anmeldenummer: 02021075.3
(22) Anmeldetag: 21.09.2002
(51) Int. Cl.: A01D 82/00

(54) **Mähaufbereiter**
Mower conditioner
Faucheuse-conditionneuse

(30) Priorität: 30.10.2001 DE 10153564
(43) Veröffentlichungstag der Anmeldung: 07.05.2003
(73) Patentinhaber: DEERE & COMPANY, Moline, Illinois 61265-8098 (US)
(72) Erfinder: Mellin, Michael James, 70100 Esmoulins (FR)
(74) Vertreter: Magin, Ludwig Bernhard

(56) Entgegenhaltungen:
- US-A- 3 324 639
- US-A- 4 472 927
- US-A- 4 637 204
- US-A- 4 961 303
- US-A- 5 033 257

## Beschreibung

Die Erfindung betrifft einen Mähaufbereiter mit zwei Walzen zum Einwirken auf Erntegut, die zum Bilden eines Spalts zwischen sich positionierbar sind, durch den das Erntegut hindurch geführt wird, sowie einen Anschlag an sich.

Die US-A-5,033,257 und US-A-4,472,927 offenbaren jeweils einen Mähaufbereiter mit zwei gegensinnig umlaufenden Walzen, die zwischen sich einen Spalt belassen, durch den das Erntegut hindurch geführt und aufgrund der mechanischen Einwirkung der profilierten Walzen aufbereitet wird. Zur Einstellung der Spalthöhe wird die obere Walze endseits jeweils in einem Schwenkarm gelagert, dessen untere Endstellung mittels eines Gestänges bestimmt wird. Hierzu weist das Gestänge an dem dem Schwenkarm gegenüberliegenden Endbereich einen Gewindebereich auf, auf den eine oder mehrere Muttern aufgeschraubt werden können, die an einem an dem Gehäuse des Mähaufbereiters gebildeten Anschlag zur Anlage bringbar sind.

Aus der US A 3 324 639 geht ein Mähaufbereiter hervor, der einen Erntegutstrom mittels einer Schnecke auf eine geringere Breite zusammenführt. Die Lage der Schnecke in Bezug auf eine Wand, auf der das Gut geführt wird, kann mittels eines keilförmigen Elements verstellt werden, das in seiner jeweiligen Lage mit einer Schraube gesichert wird. Zwei für den Aufbereitungsprozeß vorgesehene Walzen werden mittels Federn aufeinandergepreßt.

Das der Erfindung zugrunde liegende Problem wird darin gesehen, dass aufgrund der ständigen federbelasteten Stellbewegung der Walze die Gewindeverbindung zwischen der Mutter und dem Gewindebereich erheblich belastet und nach längerem Gebrauch starr wird, so dass der Spalt kaum mehr einstellbar ist.

Dieses Problem wird erfindungsgemäß durch die Lehre des Patentanspruchs 1 bzw. 6 gelöst, wobei in den weiteren Patentansprüchen Merkmale aufgeführt sind, die die Lösung in vorteilhafter Weise weiterentwickeln.

Auf diese Weise werden die in der Verstellrichtung wirkenden Kräfte nicht mehr von dem Gewinde, sondern von dem von ihm getrennten Anschlag aufgenommen. Folglich wird das Gewinde nicht mehr beschädigt, und eine Einstellung des Anschlags ist stets problemlos möglich. Eine stufenlose Verstellung ist unter anderem möglich, wenn eine Schraube durch ein Element geführt und an diesem angelegt und in einem Gewindeloch des anderen Elements gehalten wird. Anstelle einer Schraube kann auch eine Gewindebüchse oder dergleichen verwendet werden.

Eine Parallelverstellung der Auflageflächen, sogar mit erhöhter Steigung, wird durch die Verwendung zweier keilförmiger Elemente erreicht, die mit ihren schrägen Flächen aufeinander gleiten und somit den Abstand der Auflageflächen erhöhen oder erniedrigen. Die Verstellung kann in Stufen erfolgen, wozu Nasen, Haken und Vertiefungen oder dergleichen verwendet werden, oder stufenlos geschehen.

Eine Möglichkeit, die Spaltweite (vorzugsweise 2 bis 5 mm) von einer gut zugänglichen Stelle aus einzustellen, besteht darin, die Walze endseitig in jeweils einem Schwenkarm zu lagern, die Schwenkarme mit jeweils einem Gestänge zu verbinden und die Gestänge mittels einer Aufhängung in, an oder auf dem Anschlag gegenüber einem Rahmen oder Gehäuse des Mähaufbereiters zu halten. Das Gestänge kann als eine einfache Stange oder Strebe, als ein Stahlseil, eine Kette oder dergleichen ausgebildet sein.

Nach einer anderen Methode wird der Anschlag direkt in den Schwenkbereich des Schwenkarms gebracht. In diesem Fall können sowohl ein wie auch zwei keilförmige Elemente verwendet werden.

Das Gestänge kann sicher an dem Anschlag gehalten werden, wenn es gabelförmig ausgebildet ist und den Anschlag durchgreift, wobei seine Enden mittels eines Bolzens oder dergleichen verbunden werden.

Die Zuverlässigkeit und/oder Servicefreundlichkeit bekannter Mähaufbereiter kann dadurch erhöht werden, dass ein Anschlag nach dem Stand der Technik durch einen Anschlag mit einem oder zwei keilförmigen Elementen ersetzt wird, deren Steigung durch eine Verstellung quer zur Bewegungsrichtung der Walze zunimmt.

In der Zeichnung ist ein nachfolgend näher beschriebenes Ausführungsbeispiel der Erfindung dargestellt. Es zeigt:
- Fig. 1: einen Mähaufbereiter mit einer Aufbereitungsvorrichtung in Seitenansicht,
- Fig. 2: die Aufbereitungsvorrichtung in vergrößerter Darstellung in Seitenansicht mit einem verstellbaren Anschlag und
- Fig. 3: den verstellbaren Anschlag in vergrößerter Darstellung.

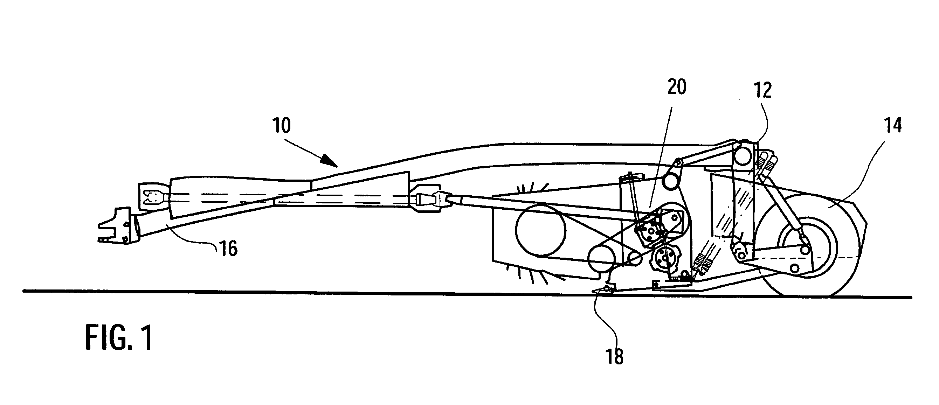

Figur 1 zeigt einen Mähaufbereiter 10 in an sich bekannter Bauweise mit einem Rahmen 12, einem Fahrwerk 14, einer Deichsel 16, einem Mähwerk 18 und einer Aufbereitungsvorrichtung 20.

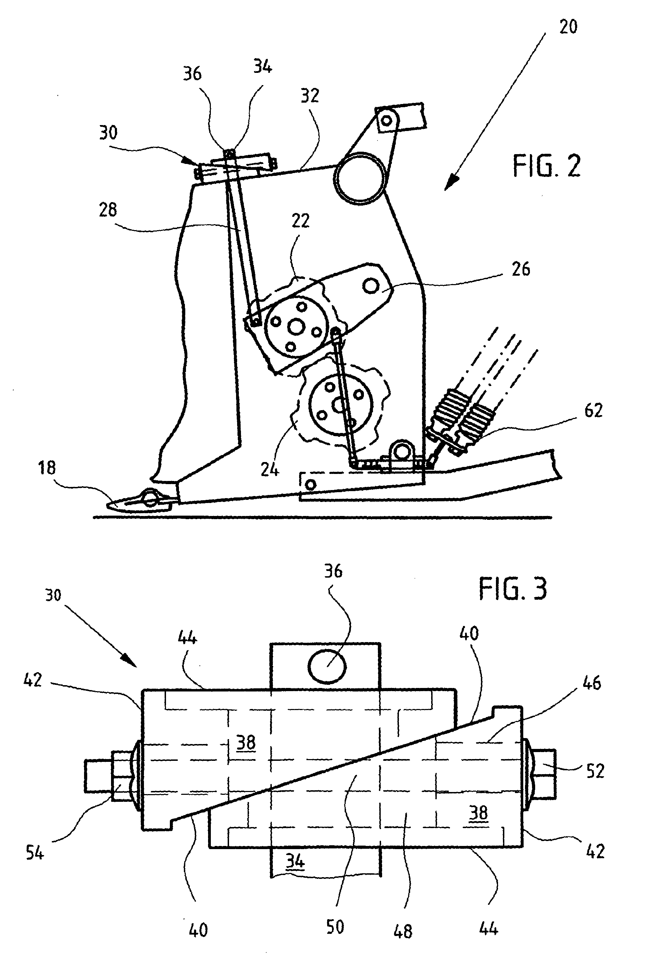

Gemäß Figur 2 enthält die Aufbereitungsvorrichtung 20 eine obere und eine untere Walze 22, 24, die jeweils mit einem kongruenten Außenprofil versehen sind und die zwischen sich einen schmalen Spalt belassen, durch den von dem Mähwerk 18 kommendes Erntegut hindurchgeführt und dabei zur Aufbereitung gequetscht wird. Während die untere Walze 24 ortsfest aber drehbar gelagert ist, wird die obere Walze 22 endseitig jeweils in einem Schwenkarm 26 gegenüber der unteren Walze 24 unter Federspannung vertikal beweglich aufgenommen.

Zur Einstellung des Spalts bzw. des Anlagedrucks der oberen auf der unteren Walze 22, 24 ist auf jeder Seite der Aufbereitungsvorrichtung 20 ein Gestänge 28 vorgesehen, das in seinem unteren Endbereich jeweils schwenkbar mit dem Schwenkarm 26 verbunden ist und in seinem oberen Endbereich auf einem Anschlag 30 aufliegt, der mit einem Gehäuse 32 der Aufbereitungsvorrichtung 20 verbunden ist. Das Gestänge 28 ist in seinem oberen Endbereich gabelförmig ausgebildet, wobei zwei Schenkel 34 des gabelförmigen Endes von einem Bolzen 36 überbrückt werden.

Der Anschlag 30 setzt sich in diesem Ausführungsbeispiel aus zwei keilförmigen Elementen 38 zusammen. In diesem Ausführungsbeispiel ist jedes Element 38 in der Seitenansicht als ein rechtwinkliges Dreieck ausgebildet und enthält somit eine einer Hypothenuse entsprechende Fläche 40, eine einer vertikal ausgerichteten Kathede entsprechende Anschlagfläche 42 und eine einer horizontal ausgerichteten Kathede entsprechende Auflagefläche 44. Im Wesentlichen mittig und senkrecht zu der Anschlagfläche 42 ausgerichtet erstreckt sich durch jedes Element 38 eine Bohrung 46. Im Wesentlichen mittig und senkrecht zu der Auflagefläche 44 ausgerichtet erstreckt sich durch jedes Element 38 eine Ausnehmung 48.

Im eingebauten Zustand sind die Elemente 38 um 180 Grad zueinander verdreht, und die Flächen 40 liegen aufeinander. Durch die Bohrungen 46 erstreckt sich ein Gewindeelement 50, insbesondere in der Form einer Schraube oder einer Gewindestange. Der Außendurchmesser des Gewindeelements 50 ist wesentlich kleiner als der Innendurchmesser der Bohrung 46. Das Gewindeelement 50 liegt an der in Figur 3 rechten Anschlagfläche 42 mit einem Kopf 52 axial an und nimmt auf der in Figur 3 linken Seite eine Mutter 54 auf, die an der entsprechenden Anlagefläche 42 anliegt. Die Mutter 54 kann als Sicherungsmutter ausgebildet sein oder mit einer Doppelmutter gesichert werden. Das untere Element 38 ist vorzugsweise aber nicht zwingend auf dem Gehäuse 32 befestigt.

Die Ausnehmung 48 ist derart groß gewählt, dass sie einen ausreichenden Freiraum zum Durchtritt der Schenkel 34 des Gestänges 28 neben dem Gewindeelement 50 belässt und zwar auch innerhalb eines begrenzten Einstellbereichs der Elemente 38. Der erforderliche Freiraum richtet sich nach dem Querschnitt der Schenkel 34, so dass beispielsweise bei aus Flachstahl gebildeten Schenkeln 34 die Ausnehmung 48 kleiner gehalten werden kann als bei aus Rundstahl gebildeten.

Das Gestänge 28 wird derart auf, an bzw. in den Anschlag 30 montiert, dass die Schenkel 34 durch die Freiräume zu beiden Seiten des Gewindeelements 50 innerhalb der Ausnehmung 48 bis über das obere Element 38 hinausgeführt und dort mit dem Bolzen 36 verbunden werden. Der Bolzen 36 kann verschraubt oder mittels Splinten lagegesichert werden.

Aus der bisherigen Beschreibung, aber auch mit Blick auf Figur 3 wird ersichtlich, dass eine Verdrehung der Mutter 54 zu einer Verstellung der Elemente 38 aufeinander führt. Eine Verstellung der Elemente 38 bewirkt eine Abstandsänderung der beiden Auflageflächen 44, die wiederum zu einer vertikalen Bewegung des Bolzens 36 und mit diesem des Gestänges 28 führt. Eine Verlagerung des Gestänges 28 an beiden Enden der oberen Walze 22 bewirkt eine Veränderung des Abstands zwischen beiden Walzen 22, 24 oder des Auflagedrucks der oberen auf der unteren Walze 22, 24. Die von der obere Walze 22 herrührenden Kräfte werden über die Auflageflächen 44 und die Flächen 40 in die Elemente 38 eingeleitet, während aufgrund des geringen horizontalen Vektors das Gewindeelement 50 im Wesentlichen unbelastet bleibt. Es ist ersichtlich, dass die Kräfte in dem Gewindeelement 50 umso kleiner sind, je geringer die Neigung der Flächen 40 ist.

Nach einer anderen nicht gezeigten Ausführungsform wird ein Anschlag mit einem oder zwei keilförmigen Elementen derart an dem Gehäuse befestigt, dass sich die Unterseite des Schwenkarms auf ihn auflegen kann. Das oder die keilförmigen Elemente werden ebenfalls mittels eines Gewindeelements verschoben.

## Patentansprüche

1. Mähaufbereiter (10) mit zwei Walzen (22, 24) zum Einwirken auf Erntegut, die zum Bilden eines Spalts zwischen sich positionierbar sind, durch den das Erntegut hindurch geführt wird, **dadurch gekennzeichnet, dass** ein Anschlag (30) verstellbar ist und wenigstens ein keilförmiges Element (38) aufweist, das quer zur Bewegungsrichtung wenigstens einer der Walzen (22, 24) mittels eines Gewindeelements (50) verstellbar ist und an dem die Walze (22) mittelbar oder unmittelbar zur Anlage bringbar ist.

2. Mähaufbereiter nach Anspruch 1, **dadurch gekennzeichnet, dass** zwei keilförmige Elemente (38) aufeinander gleitend angeordnet sind.

3. Mähaufbereiter nach Anspruch 1 oder 2, **dadurch gekennzeichnet, dass** wenigstens einer der Walzen (22) endseitig in Schwenkarmen (26) gelagert ist, die Schwenkarme (26) mit Gestängen (28) verbunden sind und die Gestänge (28) in, an oder auf dem Anschlag (30) gegenüber einem Gehäuse (32) einer Aufbereitungsvorrichtung (20) gehalten sind.

4. Mähaufbereiter nach einem oder mehreren der vorherigen Ansprüche 1 oder 2, **dadurch gekennzeichnet, dass** die Walze (22) endseitig in Schwenkarmen (26) gelagert ist und die Schwenkarme (26) sich über den Anschlag (30) auf einem Gehäuse (32) einer Aufbereitungsvorrichtung (20) abstützen.

5. Mähaufbereiter nach Anspruch 3, **dadurch gekennzeichnet, dass** das Gestänge (28) gabelförmig mit Schenkeln (34) ausgebildet ist und Schenkel (34) das Element (38) übergreifend über einen Bolzen (36) miteinander verbunden sind.

6. Anschlag (30) zum Begrenzen des Stellwegs einer oberen Walze (22) eines Mähaufbereiters (10), **gekennzeichnet durch** wenigstens ein keilförmiges Element (38), das quer zu der Bewegungsrichtung der Walze (22) verstellbar und sicherbar ist und dessen Neigung quer zu der Bewegungsrichtung der Walze (22) verläuft.

7. Anschlag (30) nach Anspruch 6, **dadurch gekennzeichnet, dass** zwei keilförmige Elemente (38) vorgesehen sind, die um jeweils 180 Grad zueinander verdreht aufeinander angeordnet sind und mittels eines Gewindeelements (50) zur Veränderung des Abstands sich gegenüberliegender Auflageflächen (44) einander gegenüber verstellbar sind.

## Claims

1. A mower conditioner (10) with two rollers (22, 24) for acting on the crop, which can be positioned to form a gap between them, through which the crop is passed, **characterized in that** a stop (30) is adjustable and comprises at least one wedge-shaped element (38) which is adjustable by means of a threaded element (50) transverse to the direction of movement of at least one of the rollers (22, 24) and on which the roller (22) can be brought into abutment indirectly or directly.

2. A mower conditioner according to claim 1, **characterized in that** two wedge-shaped elements (38) are arranged to slide on one another.

3. A mower conditioner according to claim 1 or 2, **characterized in that** at least one of the rollers (22) is mounted in pivoted arms (26) at its ends, the pivoted arms (26) being connected to rods (28) and the rods (28) being retained in, on or at the stop (30) relative to a housing (32) of a conditioning device (20).

4. A mower conditioner according to one or more of the preceding claims 1 or 2, **characterized in that** the roller (22) is mounted in pivoted arms (26) at its ends and the pivoted arms (26) are supported on a housing (32) of a conditioning device (20) via the stop (30).

5. A mower conditioner according to claim 3, **characterized in that** the rod (28) is of forked form with arms (34) and the arms (34) engaging over the element (38) are connected together by a bolt (36).

6. A stop (30) for limiting the path of adjustment of an upper roller (22) of a mower conditioner (10), **characterized by** at least one wedge-shaped element (38) which can be adjusted and be secured transverse to the direction of movement of the roller (22) and whose inclination runs transverse to the direction of movement of the roller (22).

7. A stop (30) according to claim 6, **characterized in that** two wedge-shaped elements (38) are provided and are arranged turned through 180 degrees relative to one another and adjustable relative to one another by means of a threaded element (50) for altering the distance between opposite locating surfaces (44).

## Revendications

1. Faucheuse conditionneuse (10) comportant deux cylindres (22, 24) destinés à agir sur les végétaux récoltés, lesquels peuvent être positionnés pour former une fente entre eux, à travers laquelle sont guidés les végétaux récoltés, **caractérisée en ce qu'**une butée (30) est réglable et comporte au moins un élément (38) en forme de cale, qui est réglable perpendiculairement au sens du mouvement d'au moins un des cylindres (22, 24) au moyen d'un élément fileté (50) et contre lequel le cylindre (22) peut être amené en appui indirectement ou directement.

2. Faucheuse conditionneuse selon la revendication 1, **caractérisée en ce que** deux éléments (38) en forme de cale sont agencés de manière à glisser l'un sur l'autre.

3. Faucheuse conditionneuse selon la revendication 1 ou 2, **caractérisée en ce qu'**au moins un des cylindres (22) est monté au niveau d'une extrémité dans des bras de pivotement (26), lesdits bras de pivotement (26) sont reliés à des tiges (28) et lesdites tiges (28) sont maintenues dans, contre ou sur la butée (30) par rapport à un carter (32) d'un dispositif de conditionnement (20).

4. Faucheuse conditionneuse selon l'une ou plusieurs des revendications 1 ou 2, **caractérisée en ce que** le cylindre (22) est monté au niveau d'une extrémité dans des bras de pivotement (26) et lesdits bras de pivotement (26) sont en appui par l'intermédiaire de la butée (30) sur un carter (32) d'un dispositif de conditionnement (20).

5. Faucheuse conditionneuse selon la revendication 3, **caractérisée en ce que** la tige (28) est conçue sous forme de fourche avec des branches (34) et lesdites branches (34) s'engagent au-dessus de l'élément (38) pour être assemblées l'une à l'autre au moyen d'un boulon (36).

6. Butée (30) destinée à limiter la trajectoire de réglage d'un cylindre supérieur (22) d'une faucheuse conditionneuse (10), **caractérisée par** au moins un élément (38) en forme de cale, qui peut être réglé et bloqué perpendiculairement au sens du mouvement d'au moins un des cylindres (22) et dont l'inclinaison est perpendiculaire au sens du mouvement du cylindre (22).

7. Butée (30) selon la revendication 6, **caractérisée en ce qu'**il est prévu deux éléments (38) en forme de cale, qui sont agencés l'un sur l'autre en étant opposés de 180° l'un par rapport à l'autre et peuvent être réglés l'un par rapport à l'autre au moyen d'un élément fileté (50) pour faire varier la distance entre deux surfaces d'appui (44) opposées.
